(19) Europäisches Patentamt
European Patent Office
Office européen des brevets

(11) EP 3 561 563 A1

(12) EUROPEAN PATENT APPLICATION

(43) Date of publication:
30.10.2019 Bulletin 2019/44

(21) Application number: 19000199.0

(22) Date of filing: 25.04.2019

(51) Int Cl.:
G02B 6/38 (2006.01)    G02B 6/42 (2006.01)
H01R 13/629 (2006.01)    H01R 13/62 (2006.01)
H05K 5/02 (2006.01)    E05C 9/04 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.04.2018 CZ 20180201

(71) Applicant: SQS Vláknová Optika a.s.
590 01 Nová Paka (CZ)

(72) Inventors:
• Kopácek, Ilja
509 01 Nová Paka (CZ)
• Cernik, Ludek
509 01 Nová Paka (CZ)
• Kotyk, Karel
509 01 Nová Paka (CZ)

(74) Representative: Smrckova, Marie
Velflíkova 10
160 00 Praha 6 (CZ)

(54) INSERTING/EXTRACTING DEVICE FOR CONNECTING/DISCONNECTING OPTICAL AND/OR ELECTRICAL CONNECTORS

(57) The locking mechanism (15) is provided at both of its ends with cams (2', 2") with axes (21', 21") of rotation, while the rotating cams (2', 2"), each with an impact tooth (3) and brace spike (4), are joined with a rotatable control lever (1) arranged between them, through transmission drawbars (5', 5"). The locking mechanism (15) has a control lever (1) which axis (20) of rotation is arranged between axes (21', 21") of rotation of cams (2', 2") and is parallel with them. The axes (21', 21") of rotation of cams (2', 2") define plane (22) at a distance *(s)* from the axis (20) of rotation of the control lever (1), while the distance *(s)* stands for a perpendicular distance between the plane (22) and the axis (20) of rotation of the control lever (1). The locking mechanism (15) is provided with a locking slider (6) provided on the side facing the open position of the control lever (1) with a finger grip (62) and on the opposite side with a locking element for securing the control lever (1) in the closed position, for connection of the optical and/or electrical connectors (8).

Fig. 3

(Cont. next page)

Fig. 9

## Description

## Technical Field

The technical solution concerns an inserting/extracting device for connecting/ disconnecting optical and/or electrical connectors. The inserting/extracting device includes a guide rack with openings, into which an inserting/extracting element is inserted and from which is extracted through the grooves/rails, and to the front wall of inserting/extracting element is attached a locking mechanism which is composed of a control lever, drawbars and cams, each of cams contains a brace spike and an impact tooth. The locking mechanism is equipped with a locking slider with a securing element.

## Background of the Invention

Patent CZ 304 640, owner of which is SQS Vláknová Optika a.s., Nová Paka, CZ, and which is also an applicant of the present invention, discloses an inserting device for connecting optical and/or electrical connectors in connector inserts. The device includes an inserting element that slides into the guide rack. The guide rack is provided in its side walls with brace openings for accommodating the brace elements of the inserting element. The inserting element has its front wall provided with a locking inserting mechanism.

The locking mechanism has, at its one end on the first side post, one pair of rotating cams arranged above each other. Each cam is provided with an impact tooth and a brace spike. To each cam is attached a drawbar, which basically extends across the whole width of the locking mechanism.

To the second side post at the opposite end of the locking mechanism is attached a control lever, which contains two one above the other arranged impact teeth and brace spikes. The locking mechanism is equipped with a locking slider with securing element.

The advantage of this inserting device for inserting the inserting element into the guide rack is that it transfers the subjective action of insertion from the operator onto the control lever, thereby eliminating any human factor errors, such as too fast and too strong insertion of the inserting element into the guide rack. As another benefit may be considered a protection against damage to the less visible rear mechanical parts of the guide rack when excessive pushing force is applied to the front side of the inserting element so, that the rear parts of the brace spikes will brace themselves against rear parts of the openings in the guiding rack.

The disadvantage of this inserting device is that it ensures even inserting of the inserting element into the guide rack by the control lever only until the connectors placed on the rear wall of the inserting element start pushing on the connectors located on the rear wall of the rack. At this point, the elastic elements of the connections (e.g., springs, sealing rubber, etc.) are starting to get compressed, and consequently there are forces acting against the inserting element. The construction of the locking mechanism is not symmetrical. The result of this asymmetric construction of locking mechanism is, that the side of the inserting element, on which are cams with the brace spikes, is not inserted as deep as the other side on which the brace spikes are directly attached onto the control lever. This is due to the fact that the front parts of the bracing spikes on the lever are pushing against the front parts of the openings in the guide rack by a force transferred only through one rotating joint, while the front parts of the brace spikes on the free cams push against the front parts of the openings for brace spikes on the other side of the guide rack by means of a lever transmission, which is composed of the rotating joint of the control lever and, in addition, also of the drawbars which are connected to the cams and the control lever by means of rotating joints. Since there is a certain tolerance of the manufactured parts at each of the rotating joints of the drawbars as well as the control lever, and because each part under stress is subject to a certain degree of elastic deformation, and furthermore, as it is not clear, what will be the final distribution of forces between the connector shells on the inserting element and rack due to the different types of connectors used, it is practically impossible to determine in advance, how much the insertion of one side of the inserting element will differ from the insertion of the other side of the inserting element. Accordingly, it is problematic to determine the required length of the drawbars so, as to provide for the necessary angle advancement of the front parts of the brace spikes of the free cams so, that the two opposite sides of the inserting element will be equally inserted into the guide rack at the locked state. The unsymmetrical design of this mechanism is also temperature unstable so, that the depth of insertion of one side of the inserting element relative to its other side at the locked state of the locking mechanism will vary depending on the surrounding temperature.

Another drawback of this constructional arrangement of the locking mechanism is that the control lever, as the only easily accessible element for pulling the inserting element out of the guide rack, is located at one end of the locking mechanism of the inserting element which can cause asymmetrical force distribution during its extraction, and thus present a certain risk, that the inserting element will jam during its extraction.

## Summary of the Invention

The disadvantages mentioned above are eliminated or substantially reduced by the inserting/extracting device for connecting/disconnecting the optical and/or electrical connectors according to the preamble of claim 1 of this invention, and is characterized so, that the locking mechanism is provided at both of its ends by rotating cams with their own axis of rotation, wherein the cams, each containing an impact tooth and a brace spike, are connected to the control lever, positioned between them, though drawbars. The locking mechanism has a control lever which rotation axis is located between and parallel to the axis of rotation of the cams. The rotation axes of the cams define a plane at a distance ($s$) from the axis of rotation of the control lever, wherein the distance ($s$) is a perpendicular distance between this defined plane and the axis of rotation of the control lever.

The main advantage of this invention is the positioning of the axis of the control lever between the axes of the opposite situated cams, more exactly, placement of the axis of the control lever between axes of the oppositely oriented cams, which ensures mutual even setting between a connector shell of the inserting element and a connector shell of the guide rack and thereby a reliable connection between corresponding optical and/or electrical connectors.

Parallelism of the axis of the control lever with the rotation axes of both cams ensures simplification of the structure of the inserting/extracting device and its functionality. The plane, defined by the cam axes and at a defined distance ($s$) from the axis of the control lever, assists in better operation of the structure via the fact, that it is basically parallel with the front and rear wall of the inserting/extracting element.

The design of the locking slider according to this invention is an optimal design for the positioning of the control lever and cams.

The locking mechanism is composed of an locking slider, which is provided on the side facing the open position of the control lever with a finger grip for handling via operator and on the opposite side with a locking element for securing the control lever in closed position during insertion of inserting/extracting element into the guide rack at a defined axial connection of the optical and/or electrical connectors of the inserting/extracting element with optical and/or electrical connectors of the guide rack.

The design of the present invention represents a great improvement with respect to the prior art, in particular to the closest CZ 304 640, while retaining all of its other advantages. The inserting/extracting locking mechanism according to the present invention is designed so that the depths of insertion of the side walls of the inserting/extracting element in the guide rack are independent not only from mechanical, vibration or temperature effects, but also from the elastic deformations of parts of locking mechanism under stress. This ensures the correct functioning of the operating systems under severe environmental conditions, for example under the unfavorable and changing temperature range, under stressed mechanical conditions, under extensive and variable range of vibrations that just characterize conditions in aviation and cosmonautics.

It is advantageous, when the control lever according to this invention is provided with four rotational joints arranged above each other in two pairs, while each pair of rotational joints has a common axis of rotation. Through these rotational joints are attached to the control lever four drawbars arranged in two each above the other drawbar pairs, and these pairs are mutually oppositely oriented. The control lever is through these four drawbars attached to four cams arranged in two each above the other cam pairs, mutually oppositely oriented, to which the drawbars are attached through four rotational joints, arranged each above the other in two pairs. Each pair of such each above the other arranged rotational joints of drawbars has a common axis of rotation of these rotational joints. The advantage of this arrangement of the structural elements into the opposite pairs with the same number of oppositely oriented axes of rotational joints is that it compensates for manufacturing tolerances in these rotational joints and due to that is degree of rotation of cams, in their closed position, independent from manufacturing tolerances in these rotational joints.

Also advantageous is the constructional arrangement when the locking mechanism comprises three connecting posts, two outer posts, between which is an inner post, to which the control lever is rotationally attached. To each outer post is rotationally attached a pair of cams with impact teeth and brace spikes. To each pair of cams is, through its outer ends, attached a pair of drawbars. This design arrangement with connecting posts presents an easy-to-use manufacturing option for attachment of both the control lever and the cams.

The most preferred arrangement according to this invention is an inserting/extracting device whose locking mechanism has an axis of rotation of the control lever placed in the middle between the rotational axes of the oppositely oriented cams, while the axis of rotation of the control lever lies simultaneously in a central plane perpendicular to the plane defined by the rotational axes of the opposite cams. The locking mechanism has drawbars of the same length. This arrangement represents an optimal and almost ideal design solution that provides symmetry not only in tolerances but also in the geometric arrangement of individual components. The axis of rotation of the lever is located in the plane of symmetry of the locking mechanism and essentially of the whole inserting/extracting device of this invention. Another great advantage is the possible usage of basically identical drawbars on both sides of the locking mechanism, thereby greatly improving and ensuring the correct and identical rotation of the cams on both sides of the locking mechanism. In addition, identical drawbars represent great simplification of manufacture due to the use of fewer different parts. A great advantage is, that it is easier to pull the inserting/extracting element out of the guide rack through the use of the control lever in comparison to CZ 304 640.

With advantage the locking slider includes a locking element for securing the control lever in its closed position and which is positioned between the inner post and the outer post on the side of control lever in the closed position, created as locking beak. The locking slider may be connected to the stopper via the spring. The locking slider may be provided with a protective protrusion positioned between the locking beak and the inner post. The advantage of a locking slider according to this invention is that the stopper with the spring provides for automatic locking and secure holding of the locking beak and thus secures the control lever in its closed position. Another advantage is the protective protrusion, which prevents destructive over pulling of the spring. The advantage of the finger grip is its positioning between the inner post and the outer post at such a distance from the protective protrusion, that it ensures that pulling away of locking slider will not harm operator's hand by the opening lever.

## Description of the Figures on the Diagrams

The non-limiting embodiment of the inserting/extracting device for connecting/ disconnecting of the optical and/or electrical connectors according to this invention is further described in more detail in the exemplary embodiments and explained in more detail in the attached schematic drawings.

The optimum symmetrical design of the inserting/extracting device according to this invention is shown in the attached figures 1, 2, 3, 3a, 4, 5, 6, 6a, 6b, 7, 7a, 7b, 8, 8a, 8b of which:

Fig. 1 is an inserting/extracting element in axonometric side-front view from the side of locking inserting/extracting mechanism,
Fig. 2 is an inserting/extracting element in axonometric side-rear view from the side of connector shell,
Fig. 3 is a locking inserting/extracting mechanism in axonometric view and in the open state,
Fig. 3a is a locking inserting/extracting mechanism in axonometric view and in the secured state,
Fig. 4 is a locking inserting/extracting mechanism in axonometric view from the top in the secured state,
Fig. 5 is a guiding rack in axonometric side-front view,
Fig. 6 is an inserting/extracting element with a guiding rack in view from the top in the extracted state,
Fig. 6a is a detail A from Fig. 6,
Fig. 6b is a schematic illustration of the connector's connection in the disconnected state from the Fig. 6,
Fig. 7 is an inserting/extracting element with a guiding rack in view from the top in the inserted state,
Fig. 7a is a detail B from Fig.7,
Fig. 7b is a schematic illustration of the connector's connection in the inserted state from the Fig.7,
Fig. 8 is an inserting/extracting element with a guiding rack in view from the top in the secured state,
Fig .8a is a detail C from Fig. 8 and
Fig. 8b is a schematic illustration of the connector's connection in the secured state from the Fig.8.
The asymmetrical solution of inserting/extracting device according to this invention is illustrated in the attached Figures 9, 9a of which
Fig. 9 is a locking inserting/extracting mechanism in axonometric view and in the open state,

Fig. 9a is a locking inserting/extracting mechanism in axonometric view and in the secured state.

## Examples of Implementing the Invention

### Example 1

(Fig. 1, 2, 3, 3a, 4, 5, 6, 6a, 6b, 7, 7a, 7b, 8, 8a, 8b)

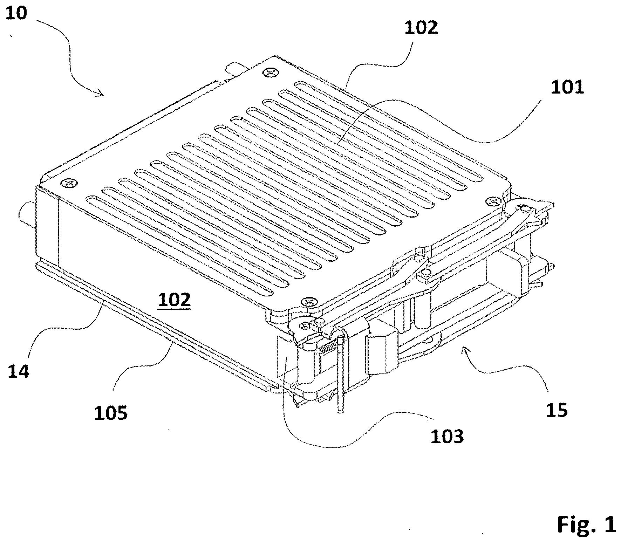

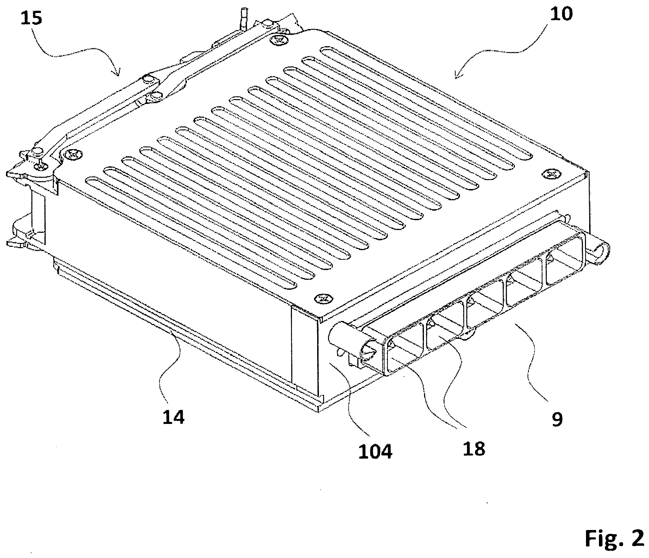

Figures 1 and 2 illustrate a specific embodiment of the inserting/extracting element 10, to which front wall 103 is attached symmetrically arranged locking inserting/extracting mechanism 15.

The inserting/extracting element 10 is basically rectangular. It comprises an upper lid 101 and an opposite bottom wall 105, a front wall 103 and an opposite back wall 104, and two opposite side walls 102. In a particular embodiment, the lid 101 and the bottom wall 105 have dimensions of 100 mm x 100 mm, the height of the front wall 103, rear wall 104 and side walls 102 is 30 mm.

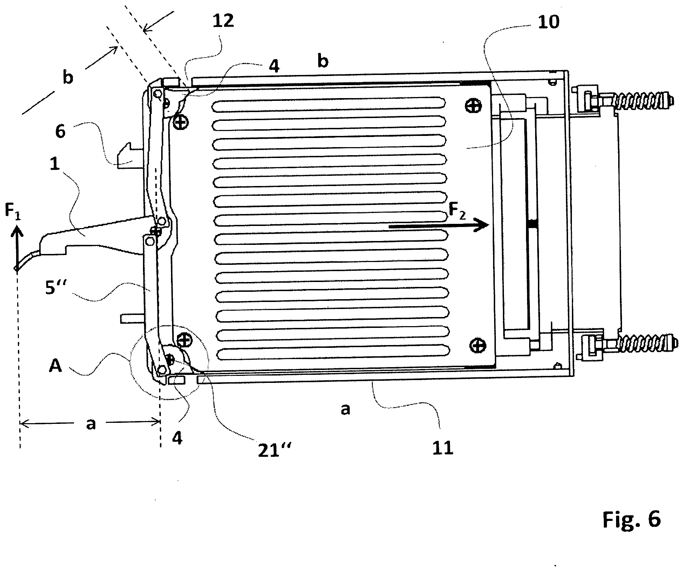

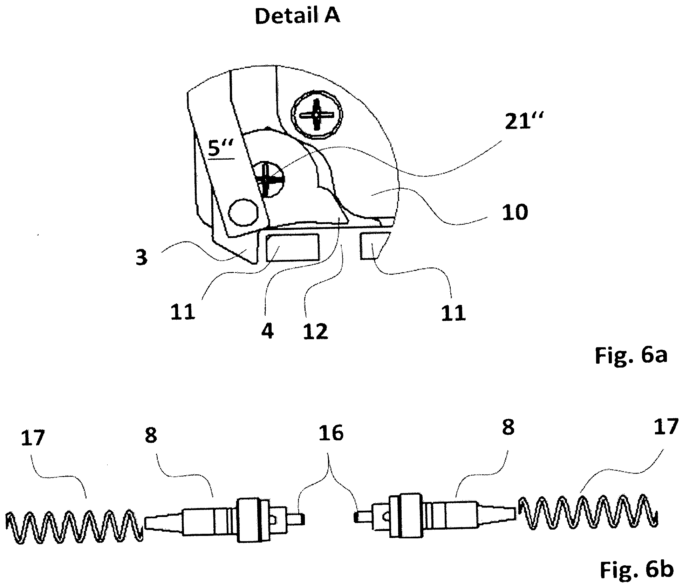

To the rear wall 104 of the inserting/extracting element 10 is attached a connector shell 9. In the connector shell 9, in the exemplary embodiment of Figure 2, there are five openings 18. In each opening 18 is placed one connector insert which may contain optical and/or electrical connectors 8. The optical connector 8 consists of a connector body, ferrule 16 for optical fibers and connector springs 17, as shown, for example, in Figure 6b.

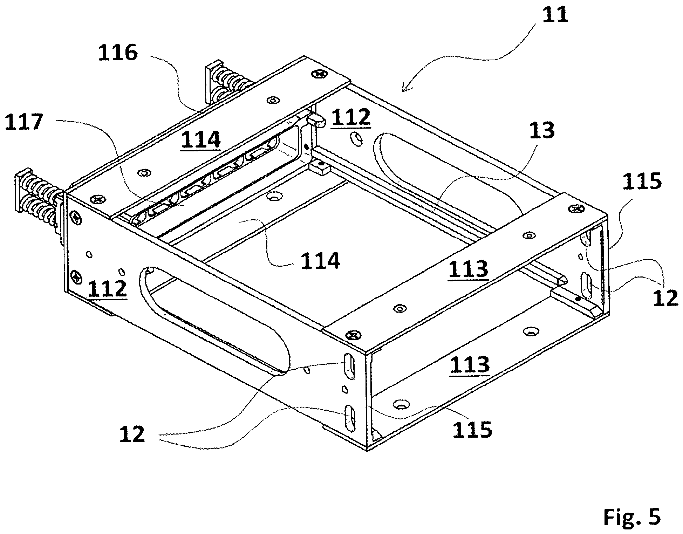

As can be seen from Fig. 1 and 2, a particular embodiment of the inserting/extracting element 10 has each of its side walls 102 provided on the outside with a guide groove 14. The inserting/extracting element 10 inserts into the guide rack 11, which is in its exemplary embodiment illustrated in Fig. 5.

The guide rack 11 is rectangular. It has two opposite side walls 112 which, in the exemplary embodiment of Fig. 5, are mutually connected at both their ends by four connecting elements 113, 114, more specifically by two each above the other arranged front connecting bars 113 facing the front edges 115 and two each above the other arranged rear connecting bars 114 facing rear wall 116 of the guide rack 11. The front ends of the sidewalls 112 represent front edges 115. To the rear wall 116 of the guide rack 11 is attached connector shell 117. In a particular embodiment are side walls 112 of guide rack 11 of 140 mm in length and 40 mm in height. Rear wall 116, front and rear connecting bars 113, 114 have width of 110 mm.

In the embodiment of Fig. 5, each side wall 112 of the guide rack 11 in its front part facing the front edge 115 is provided with two openings 12 arranged one above the other, used for lodging of bracing elements, in this exemplary embodiment of bracing spikes 4 of locking mechanism 15 of inserting/extracting element 10. In this exemplary embodiment, both side walls 112 of the guide rack 11 are provided on their inner sides with guide rails 13 which are shaped to fit into the guide grooves 14 of inserting/extracting element 10.

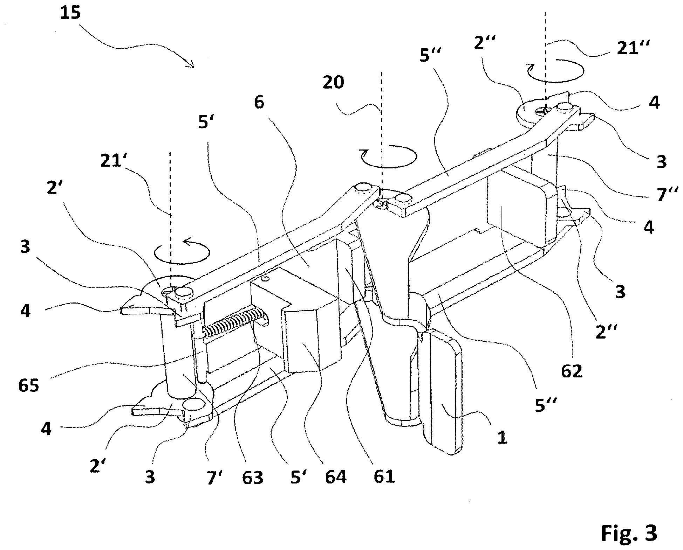

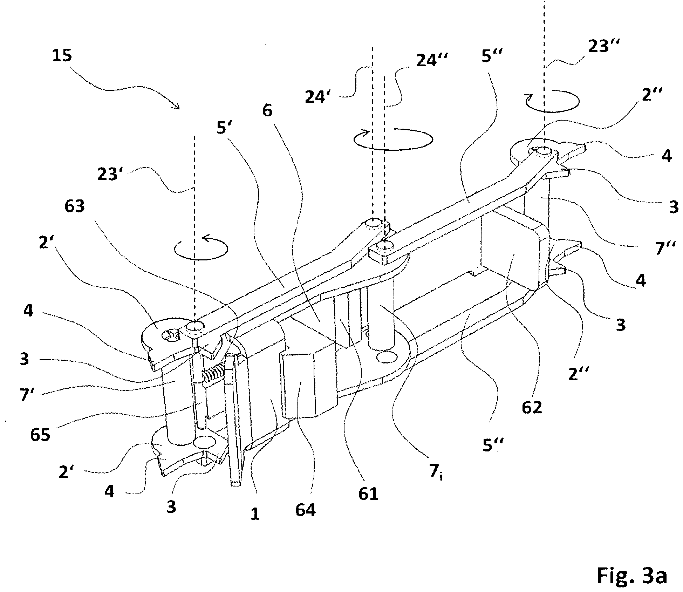

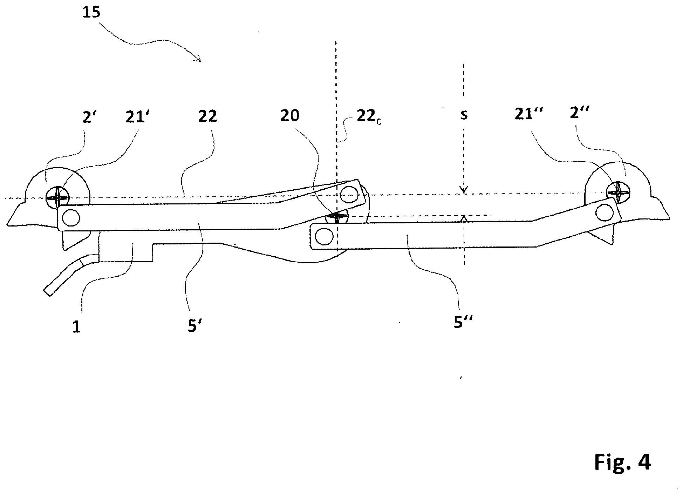

Precisely detailed is the locking mechanism 15 shown in Figs. 3, 3a and 4. The inserting/extracting locking mechanism 15 according to this invention comprises always three connecting posts, two outer posts 7', 7" between which there's an inner connecting post 7i for the attachment of the control lever 1, between the two posts 7', 7". In an exemplary embodiment of the optimal symmetrical arrangement, is the inner post 7i located in the central plane 22c.

The presented locking mechanism 15 comprises three connecting posts 7i, 7', 7" through which the control lever 1 and the cams 2', 2" are rotationally attached to the front wall 103 of the inserting/extracting element 10. The inner post 7i constitutes an axis 20 of rotation of the control lever 1 and is used for the rotational attachment of the control lever 1 to the front wall 103 of the inserting/extracting element 10. The connecting posts 7' respectively 7" constitute the axis 21', 21" of rotation of the cams 2' respectively 2" and are used to the rotational attachment of cams to the front wall 103 of the inserting/extracting element 10. The locking mechanism 15 according to this invention comprises four elongated transmission drawbars 5', 5". The inner ends of the drawbars 5', 5" are rotationally attached to the control lever 1 through their mutually rotational joints with axes 24', 24" of rotation. The outer ends of the drawbars 5', 5" are rotationally attached to the cams 2', 2" through their rotational joints with the axes 3', 23" of rotation.

In an exemplary embodiment of the optimum symmetrical arrangement are drawbars 5', 5" equally long and are of the identical shape.

The control lever 1 is in "open position", when it forms an angle of about 90 ° with the front wall 103 of the inserting/extracting element 10. The control lever 1 is in "closed position", when the lever 1 forms with the front wall 103 of the inserting/extracting element 10 an angle of about 0°. The control lever 1 is of such a shape, that its outer free end is able to be securely locked in its closed position.

Each cam 2', 2" is provided with two protrusions, the protrusion which extends beyond the width of the inserting/extracting element 10 when the control lever 1 is open is designated as an impact tooth 3 and a protrusion which extends beyond the width of the inserting/extracting element 10 in the closed position of the control lever 1 is designated as a brace spike 4.

The locking inserting/extracting mechanism 15 of this invention is provided with a locking slider 6 which is located in the groove of the front wall 103 of the inserting/extracting element, more specifically parallel with the plane 22. The plane 22 corresponds to the plane determined by axes 21', 21" of rotation of cams 2', 2". The locking slider 6 is provided on the side of the locking mechanism 15 in the closing direction of the control lever 1 with the locking beak 64 and the protective protrusion 61 arranged between the locking beak 64 and the inner post 7i and, on the opposite side, in the opening direction of the control lever 1 by the finger grip 62. Between the locking slider 6 and the stopper 65 of the inserting/extracting element 10 is a spring 63.

The locking mechanism 15 comprises four cams 2', 2" which are located at both ends of the locking mechanism so, that their axes 21', 21" of rotation are perpendicular to the bottom wall 105 of the inserting/extracting element 10 and form a plane 22, which is basically parallel with the front wall 103 of the inserting/extracting element 10. Thus, the two cams 2' with the axis 21' of rotation are arranged one above the other in the closing direction of the control lever 1 while the other two opposite cams 2" with the axis 21" of rotation are arranged one above the other in the opening direction of the control lever 1. The axes 21', 21" of rotation of cams 2', 2" are in the exemplary embodiment of an optimum symmetrical arrangement at the same distance from the plane 22c, which is perpendicular to the plane 22. The axis 20 of rotation of the control lever 1 lies in the plane 22c at a distance $s$ from the plane 22. The distance $s$ in possible exemplary arrangement is approximately 3.6 mm.

**Example 2**

(Fig. 9, 9a)

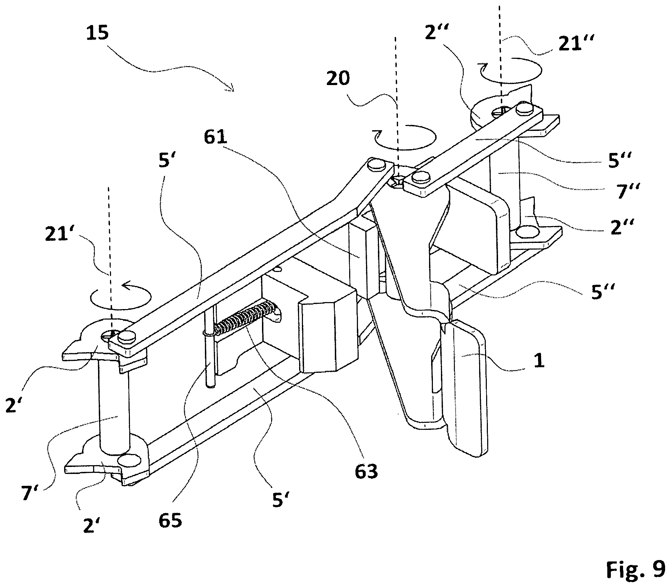

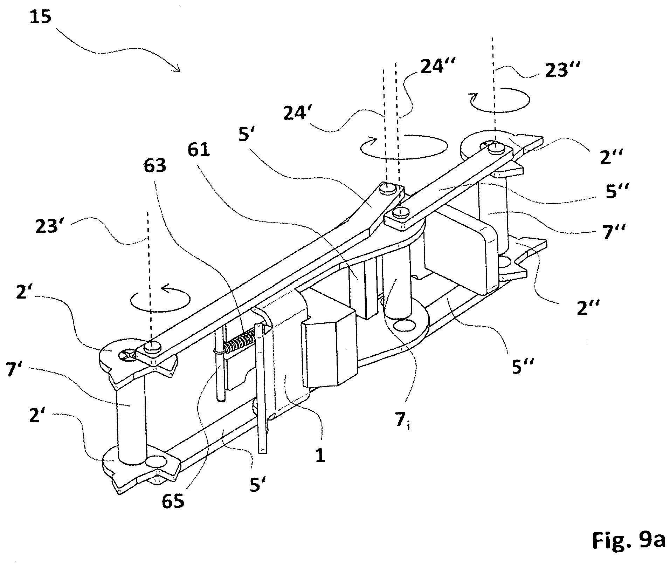

In the pictures 9 and 9a is show an alternative, asymmetrically arranged locking inserting/extracting mechanism 15, which differs from Example 1 in that the axis 20 of the control lever 1 of locking mechanism 15 is arranged asymmetrically between opposite cams 2', 2", and the length of the opposite pairs of drawbars 5', 5" is not the same. In one of the possible alternative embodiments is the locking mechanism 15 shown in Figs. 9 and 9a, more specifically in Fig. 9 in the "open position" and in Fig. 9a in the "closed position" of the control lever 1.

In the Fig. 9 is the control lever 1 shown in the open position and out of the symmetry of the locking mechanism 15. Its axis 20 of rotation is situated closer to the axis 21" of rotation of the pair of each above the other arranged cams 2", the upper and lower cam 2", and farther away from the oppositely situated axis 21' of rotation of the each above the other arranged pairs of cams 2', upper and lower cam 2'. The pair of drawbars 5', upper and lower drawbar 5' is longer than the oppositely situated pair of drawbars 5", upper and lower drawbar 5".

In Fig. 9a is also apparent this asymmetrical attachment of the control lever 1 in the closed position on the inner post 7i. In this possible particular asymmetrical arrangement of the inserting/extracting device, is the not shown distance $s$ about 2 mm large, where $s$ is the distance between not shown plane 22 determined by the axes 21', 21" of rotation of the opposite cams 2', 2" from the axis 20 of rotation of the control lever 1.

Although this is an asymmetric arrangement of the locking mechanism 15, its design also shows better results with respect to the state of the technology according to CZ 304 640, in particular in the better handling of the device.

The inserting/extracting device for connecting/disconnecting of the optical and/or electrical connectors 8 according to this invention, described in Examples 1 and 2, works by insertion of inserting/extracting element 10 into the guide rack 11 in three phases and by extraction of the guide rack 11 from the inserting/extracting element 10 in one phase.

In the first phase is firstly fitted and then inserted the one inserting/extracting element 10 into one guide rack 11. During this inserting is control lever 1 fully opened and the guide grooves 14 of the inserting/extracting element 10 are guided by the rails 13 on the inner side walls 112 of the guide rack 11. The first phase ends when impact teeth 3 hit the front edges 115 of the guide rack 11 as per Fig. 6.

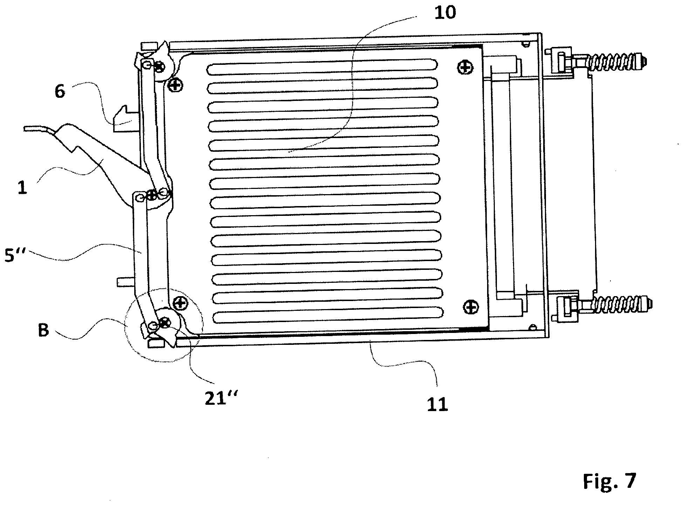

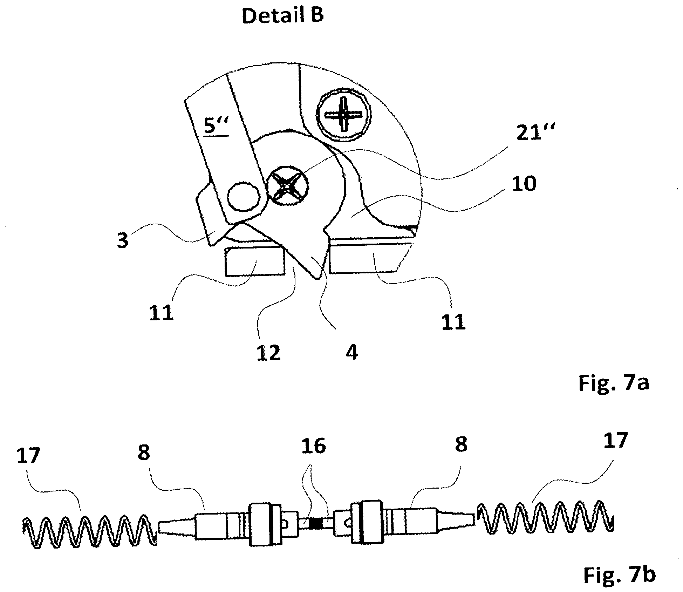

In the second phase, after the impact elements 3 hit onto the front edges 115 of the guide rack 11, cams 2', 2" are rotated, their rotating movement is then transferred via drawbars 5', 5" onto the control lever 1, which will automatically turn in the closing direction. At the same time the brace spikes 4 of cams 2', 2" will slide into the openings 12 of the side walls 112 of the guide rack 11 accordingly to Fig. 7. Fig. 6 schematically shows force $F_1$, with which the operator pushes onto the control lever 1 and which is, thanks to the lever transmission mechanism, transferred onto the brace spikes 4, which then push with resulting force $F_2$ against the front parts of the openings 12 and which thus helps to overcome the resistance caused by either springs of the optical connectors 8 or by the friction force of the electrical connectors. It can be stated, that the relationship between force $F_1$ and $F_2$ is as follow:

$$F_2 = a \times (2 \times F_1 / b),$$

where $F_1$ is the force exerted by the operator, $F_2$ is the resulting inserting force, a is the radius of rotation of the control lever 1 and b is the radius of rotation of the brace spikes 4. As is apparent from Fig. 7b, during this phase a physical contact between optical and/or electrical contacts will occur.

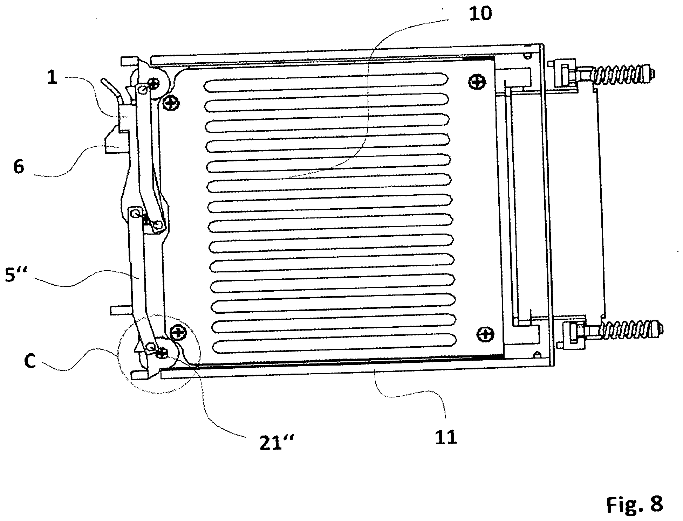

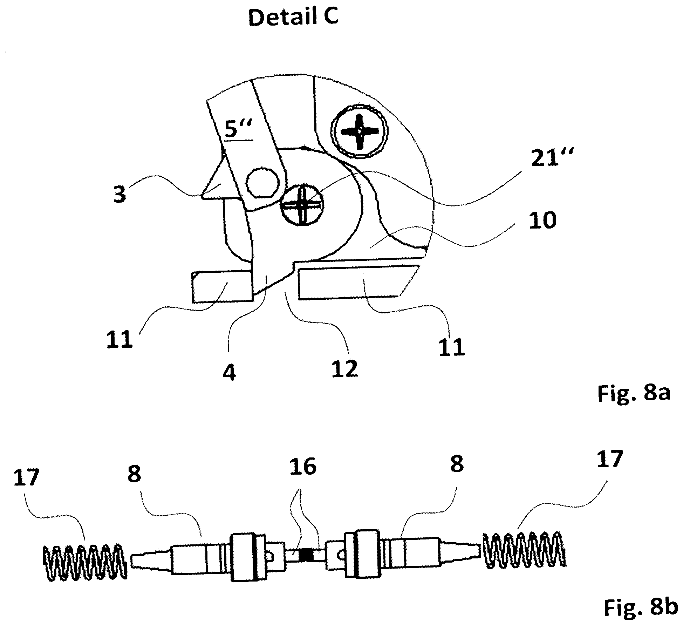

In the third phase the control lever 1 by hitting the locking beak 64 pushes the locking slider 6 away from the stopper 65 and, by means of the spring 63, the locking slider 6 slides back in order to lock the control lever 1 in the closed position. The snapping of the locking beak 64 of the control lever 1 constitutes a secured connection of a connector as is shown in Figures 8, 8b. Particularly from Fig. 8b is evident compression of the springs 17, which provide for a functional optical connection.

The extraction of inserting/extracting element 10 represents a disconnection of the connector's contacts by extraction of inserting/extracting element 10 out of the guide rack 11 by the operator, via the finger grip 62 overpowering the force of the spring 63 and frictional force between the locking beak 64 and the inner end of the control lever 1, sliding the locking slider 6 into such a position, in which the protecting protrusion 61 hits the inner post 7i, in order to prevent the spring 63 from being overstretched. This slide away of the locking slider 6 causes the unlocking of the control lever 1. In the case of electrical connectors, it is necessary during this phase to exert relatively great force for the extraction of electric pins from their sockets. Therefore a special shape of the rear edges of the brace spikes 4 is utilized here which, while opening the control lever 1, push through a lever based transmission against the rear parts of the openings 12, which helps the extraction of electric pins from their sockets. After the brace spikes 4 are fully removed from the openings 12, the control lever 1 is in a perpendicular position with respect to the front wall 103 and due to its position in the center plane of the inserting/extracting element 10, it is possible to complete this extracting phase by simply pulling on it.

The described exemplary embodiments of the inserting/extracting device are long term tested and advantageous and represent an optimal number of structural elements and their optimal mutual arrangement within the scope of the patented claims. These exemplary embodiments of the invention are not completely exhaustive and other combinations and variants of the solution within the scope of the claims are possible.

For example, the inserting/extracting element 10 and the guide rack 11 may have different dimensions and shapes than those shown in the exemplary embodiments, their shape may be close to that of a cube, or some walls of this inserting/extracting element 10 and/or a guide rack 11 may approach a shape of that of a square, or may have a larger height than the width.

Both of the exemplary solutions use one control lever 1. It is possible to use more control levers 1 within the scope of the patent claims such as placed one above the other, which has also been tested in the course of development. This solution brings larger number of structural components, a certain risk of instability and more complicated handling as well as securing in the closed position.

The two described exemplary solutions use four transmission drawbars 5', 5", four cams 2', 2", four impact teeth 3 and four brace spikes 4 arranged each above the other in opposite pairs, which proved to show a very advantageous realization of the device according to this invention. There is also a possibility to use only two transmission drawbars 5', 5" two cams 2', 2", two impact teeth 3 and two brace spikes 4, which represents fewer structural elements but impairs the handling and stability of the device. On the contrary, a larger number of structural elements, such as those arranged in multiple pairs each above the other, which was also tested within a development framework, represent a larger number of structural elements, which doesn't significantly contribute to higher stability of the device or to its improved handling.

## Industrial Applicability

The inserting/extracting device for connecting/disconnecting the optical and/or electrical connectors 8 can be used in any industry such as data and telecommunications networks, aerospace, space, rail and shipping transportation, energy, mining and chemical industry, ect., where it is necessary to ensure a fast replacement of inserting/extracting elements 10 with optical and/or electronical components, where the connection between the inserting/extracting element 10 and the guide rack 11 is realized by optical and/or electrical connectors 8, which are suitable for the connections placed in the rear plane of the inserting/extracting elements 10, such as connectors according to EN4165 standard.

List of Reference Numbers

[0047]

1 control lever
2 cam
2' cam 2' located in the closing direction of the control lever 1
2" cam 2" located in the opening direction of the control lever 1
3 impact tooth 3 of cam 2
4 brace spike 4 of cam 2
5 drawbar
5' drawbar 5' belonging to cam 2'
5" drawbar 5" belonging to cam 2"
6 locking slider

    61 protecting protrusion 61 of locking slider 6
    62 finger grip 62 of locking slider 6
    63 spring 63 of locking slider 6
    64 locking beak 64 of the locking slider 6
    65 stopper 65 for locking slider 6

7' outer connecting post 7' belonging to cams 2'
7" outer connecting post 7" belonging to cams 2"
7i inner connecting post 7i belonging to control lever 1
8 connectors
9 connector shell 9 of inserting/extracting element 10
10 inserting/extracting element

    101 lid 101 of inserting/extracting element 10
    102 two opposite side walls 102 of inserting/extracting element 10
    103 front wall 103 of inserting/extracting element 10
    104 rear wall 104 of inserting/extracting element 10
    105 bottom wall 105 of inserting/extracting element 10

11 guide rack

112 opposite side walls 112 of guide rack 11
113 front connecting bars 113 of guide rack 11
114 rear connecting bars 114 of guide rack 11
115 front edges 115 of side walls 112 of guide rack 11
116 rear wall 116 of guide rack 11
117 connector shell 117 of guide rack 11

12 openings 12 for brace spikes 4 of cam 2
13 guide rails
14 guide grooves
15 locking inserting/extracting mechanism 15
16 ferrule 16 of optical connector 8
17 spring 17 of optical connector 8
18 openings 18 for connector inserts
20 axis 20 of control lever 1
21 axis 21 of cam rotation 2
21' axis 21' of cams rotation 2'
21" axis 21" of cams rotation 2"
22 plane 22 is defined by axes 21' and 21"
22c central plane 22c perpendicular to plane 22 and passes through the axis 20 of control lever 1
23 axis 23 of rotating joints between drawbars 5 and cams 2
23' axis 23' of rotating joints between drawbars 5' and cams 2'
23" axis 23" of rotating joints between drawbars 5" and cams 2"
24 axis 24 of rotating joints between control lever 1 and drawbars 5
24' axis 24' of rotating joints between control lever 1 and drawbars 5'
24" axis 24" of rotating joints between control lever 1 and drawbars 5"
s perpendicular distance s between plane 22 and rotation axis 20 of control lever 1
$F_1$ force $F_1$ is exerted by the operator on the control lever 1
$F_2$ is effective inserting force $F_2$,
a radius a of rotation of control lever 1
b radius b of rotation of brace spike 4

## Claims

1. The inserting/extracting device for connecting/disconnecting the optical and/or electrical connectors includes a guide rack (11) into which an inserting/extracting element (10) is inserted and from which is extracted through the grooves(14)/rails(13); the guide rack (11) is provided with openings (12) in the side walls (112) for brace spikes; to the front wall (103) of an inserting/extracting element (10) is attached a locking mechanism (15) which contains a control lever (1), transmission drawbars (5), cams (2) with brace spikes (3) and impact teeth (4) and a locking slider (6) with a locking element, **wherein** locking mechanism (15)

a) is provided at both of its ends with cams (2', 2") with axes (21', 21") of rotation, while the rotating cams (2', 2"), each with an impact tooth (3) and brace spike (4), are joined with a rotatable control lever (1) arranged between them, through transmission drawbars (5', 5"),

b) has a control lever (1) which axis (20) of rotation is arranged between axes (20', 21") of rotation of cams (2', 2") and is parallel with them, and axes (21', 21") of rotation of cams (2', 2") define plane (22) at a distance (s) from the axis (20) of rotation of the control lever (1), while the distance (s) stands for a perpendicular distance between the plane (22) and the axis (20) of rotation of the control lever (1),

c) is provided with a locking slider (6) provided on the side facing the open position of the control lever (1) with a finger grip (62) and on the opposite side with a locking element for securing the control lever (1) in the closed position, for connection of the optical and/or electrical connectors (8).

2. Inserting/extracting device according to claim 1, **wherein** the control lever (1)

(d) is provided with four rotating joints arranged above each other in two pairs, each pair of rotating joints has a common axis (24', 24") of rotation, while to the control lever (1) are through these rotating joints attached four transmission drawbars (5', 5') arranged in two each above the other pairs of drawbars (5', 5"), and these pairs are mutually oppositely arranged;

e) is through these four drawbars (5', 5") connected with four cams (2', 2") arranged in two each above the other situated pairs of cams (2', 2") mutually oppositely arranged, to which are the drawbars (5', 5") attached through four rotating joints, arranged each above the other in two pairs, out of which each pair of these each above the other arranged rotating joints of drawbars (5', 5") has common axes (23', 23") of rotation of the rotating joints.

3. Inserting/extracting device according to claim 1, **wherein** the locking mechanism (15) comprises: three connecting posts (7', 7", 7i), more specifically two outer posts (7', 7") between which is an inner post (7i), to the inner post (7i) is rotationally attached a control lever (1) and to each outside post (7', 7") is attached a pair of cams (2', 2") with impact teeth (3) and brace spikes (4).

4. Inserting/extracting device according to claim 1, **wherein**

the locking mechanism (15)

a) has an axis (20) of rotation of the control lever (1) located in the middle between the axes (21', 21") of rotation of the oppositely oriented cams (2', 2"), while the axis (20) of rotation of the control lever (1) lies simultaneously in central plane (22c) which is perpendicular to the plane (22) defined by the axes (21', 21") of rotation of oppositely oriented cams (2', 2 ") and

b) has transmission drawbars (5', 5") of the same length.

5. Inserting/extracting device according to claim 1, **wherein** the locking slider (6) has a locking element for securing locking lever (1) in its closed position, arranged between the inner post (7i) and the outer post (7', 7") on the side of the control lever (1) in the closed position, created as a locking beak (64).

6. Inserting/extracting device according to claim 1, **wherein** locking slider (6) is through the spring (63) connected with the stopper (65).

7. Inserting/extracting device according to claim 5, **wherein** the locking slider (6) is provided with a protective protrusion (61) arranged between the locking beak (64) and the inner post (7i).

**Fig. 1**

**Fig. 2**

**Fig. 3**

**Fig. 3a**

**Fig. 4**

Fig. 5

Fig. 6

**Detail A**

**Fig. 6a**

**Fig. 6b**

Fig. 7

**Detail B**

**Fig. 7a**

**Fig. 7b**

Fig. 8

## Detail C

Fig. 8a

Fig. 8b

Fig. 9

Fig. 9a

Europäisches Patentamt

European Patent Office

Office européen des brevets

# EUROPEAN SEARCH REPORT

Application Number

EP 19 00 0199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 916 652 C (NORDWESTDEUTSCHE RUNDFUNK) 16 August 1954 (1954-08-16) * paragraphs [0001] - [0007]; figures 1,2 * ----- | 1-7 | INV. G02B6/38 G02B6/42 H01R13/629 H01R13/62 H05K5/02 E05C9/04 |
| Y | US 2014/376864 A1 (PISARÍK MICHAEL [CZ] ET AL) 25 December 2014 (2014-12-25) * paragraph [0016]; figures 3,4 * ----- | 1-7 | |
| A | EP 2 523 289 A1 (TYCO ELECTRONICS RAYCHEM BVBA [BE]) 14 November 2012 (2012-11-14) * paragraphs [0018] - [0023]; figures 5-23 * ----- | 6 | |

TECHNICAL FIELDS SEARCHED (IPC)

G02B
H01R
H05K
E05C

The present search report has been drawn up for all claims

| Place of search | Date of completion of the search | Examiner |
|---|---|---|
| The Hague | 13 September 2019 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 00 0199

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2019

| Patent document cited in search report | | Publication date | Patent family member(s) | | Publication date |
|---|---|---|---|---|---|
| DE 916652 | C | 16-08-1954 | NONE | | |
| US 2014376864 | A1 | 25-12-2014 | CZ | 304640 B6 | 13-08-2014 |
| | | | DE 202014011098 U1 | | 06-11-2017 |
| | | | DE 202014011250 U1 | | 09-11-2018 |
| | | | EP | 2811326 A1 | 10-12-2014 |
| | | | US | 2014376864 A1 | 25-12-2014 |
| EP 2523289 | A1 | 14-11-2012 | EP | 2523289 A1 | 14-11-2012 |
| | | | WO | 2012152819 A1 | 15-11-2012 |

EPO FORM P0459

For more details about this annex : see Official Journal of the European Patent Office, No. 12/82